(19) Europäisches Patentamt / European Patent Office / Office européen des brevets

(11) **EP 1 879 163 A1**

(12) **EUROPEAN PATENT APPLICATION**

(43) Date of publication:
**16.01.2008 Bulletin 2008/03**

(51) Int Cl.:
*G09B 29/10* (2006.01)   *G01C 21/26* (2006.01)

(21) Application number: **07013276.6**

(22) Date of filing: **06.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **12.07.2006 JP 2006191361**

(71) Applicants:
• **Hitachi, Ltd.**
  **Chiyoda-ku**
  **Tokyo 100-8220 (JP)**

• **CLARION Co., Ltd.**
  **Bunkyo-ku,**
  **Tokyo 112-8608 (JP)**

(72) Inventors:
• **Guo, Tao**
  **Chiyoda-ku**
  **Tokyo 100-8220 (JP)**
• **Iwamura, Kazuaki**
  **Chiyoda-ku**
  **Tokyo 100-8220 (JP)**

(74) Representative: **Strehl Schübel-Hopf & Partner**
  **Maximilianstrasse 54**
  **80538 München (DE)**

(54) **Road exit modeling using aerial image**

(57) To improve map accuracy by a new method that represents a road exit, there is provided a map generating apparatus for drawing a road map from digital data of a road map and a photographic image of a region that includes a region depicted by the road map, in which: a provided photographic image and a provided road map are geographically aligned with each other; a start point and an end point of an exit line which separates a main road and a branch road are extracted from the aligned photographic image; an exit line connecting the extracted start point and the extracted end point is determined; and a position of an exit branch is identified based on the determined exit line.

FIG.3

## Description

CLAIM OF PRIORITY

The present application claims priority from Japanese patent application JP 2006-191361 filed on July 12, 2006, the content of which is hereby incorporated by reference into this application.

BACKGROUND OF THE INVENTION

This invention relates to extraction of information for a geographic information system (GIS) from an aerial image. More particularly, this invention relates to development of a new method of modeling an exit and evaluation of an existing digital map for car navigation in regard to information on exit and branch roads of the exit with the use of aerial images which help to improve the efficiency of a car navigation system.

The growing demand for car navigation systems has recently turned the development of hardware and software for car navigation systems to a high quality location-based service (LBS). The accuracy of GIS data as the basic information of LBS, particularly the accuracy of a road map for a car navigation system, is an important matter.

Locating something on a map with the use of positioning information such as GPS data is called "map matching", and is a very important technology in car navigation systems. Similarly, showing a vehicle in a place on the map different from a position where it really exists is called "map mismatching". The "map mismatching" issue is due to the inaccuracy of map data used in a navigation system. As a solution to the "map mismatching" issue, road-matching has been put into practical use which is a technique of showing a vehicle on a road on the map when the deviation from a position on the road is within a given range. A technique of improving the accuracy of a map with the use of satellite images or the like has also been proposed (see, for example, JP 2005-234603 A).

SUMMARY OF THE INVENTION

Even with the above-mentioned road-matching, when a geographical mismatch between the position of a vehicle and a road is larger than a predetermined threshold, the vehicle position displayed on a navigation system may be in a wrong road before suddenly jumping to a correct road. The "map mismatching" issue arises particularly frequently at road exits (i.e., when a vehicle running on one road enters another road). At the time the mismatch becomes larger than a predetermined threshold, the vehicle position displayed on a navigation system suddenly jumps from a main road to its branch road (or from a branch road to the main road).

Specifically, the fact that conventional road maps for navigation use an intersection point P between a main road and an exit branch road to represent a branch of a road often causes the "map mismatching" issue in navigation processing near an exit of a road.

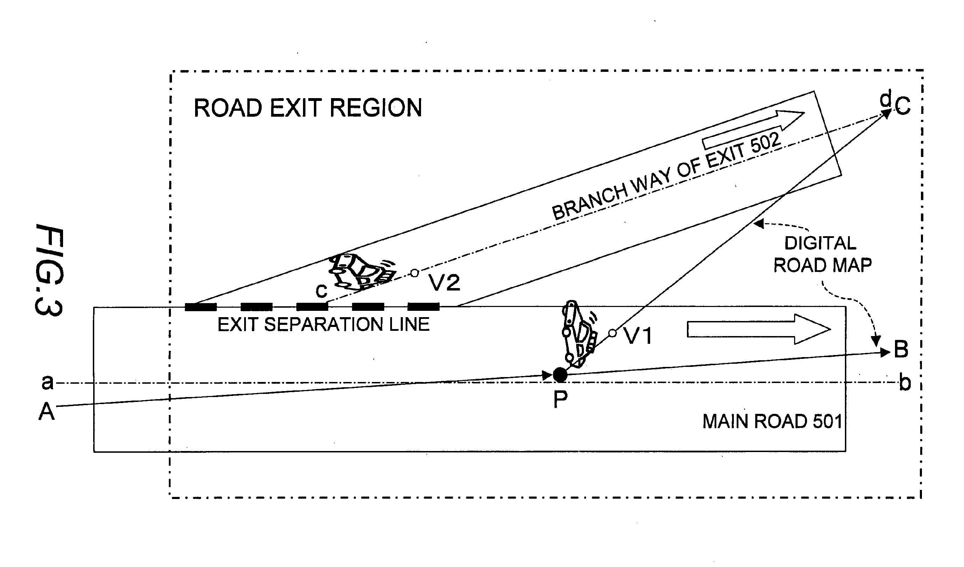

Information on the exit point P on conventional maps is obscure and inaccurate. It is difficult to find the correspondence between an actual exit point and an exit point on the map and, in most cases, the two do not correspond to each other well. For instance, at an exit point on a road map shown in FIG. 3, when an angle formed by a main road A-B and an exit branch PC is large, the intersection point P moves in a direction B away from the correct position of the exit point.

Further, maps hardly guarantee the accuracy in reflecting actual roads. Most map makers do not strictly define an intersection point of two roads as observed in the intersection point P of FIG. 3. This inaccuracy raises a problem in that a navigation system displays a vehicle running on an exit branch road when the vehicle is actually at V1 on line AB of a main road 501. It is the same for when a vehicle is at V2 on an exit branch road 502 after taking the exit, and a navigation system displays the vehicle still traveling on the main road.

"Map mismatching" as such is merely an example of problems that arise from the use of the current road maps. Another problem is that there has been no effective method of evaluating the deviation of a road exit on a map from the real one.

Map mismatching as such confuses drivers and can be a threat to safe driving. It is therefore required to improve the map accuracy by providing a new method that represents a road exit and to evaluate existing maps about information on road exits.

A representative aspect of this invention is as follows. That is, there is provided a map generating apparatus for drawing a road map from digital data of a road map and a photographic image of a region that includes a region depicted by the road map, including: a computing unit; and a memory. The computing unit is configured to: geographically align a provided photographic image and a provided road map with each other; extract, from the aligned photographic image, a start point and an end point of an exit line which separates a main road and a branch road; determine an exit line connecting the extracted start point and the extracted end point; and identify a branching position between the main road and the branch road based on the determined exit line.

According to an aspect of this invention, an exit of a road can be defined clearly.

In addition, the exit line, which defines the exit, is defined in association with an exit separation line, which is easily extracted from an aerial image. The main road and its branch road can thus be discriminated from each other effectively. This works well in reducing map mismatching, and improves the performance of a navigation system.

Further, exit information according to this invention can readily be extracted from an aerial image and well conforms with the data configuration of the road maps, thereby accomplishing smooth cooperation with a map database. Still another effect of this invention is that the main road and its branch road can be linked logically and physically through a diversity of link modes.

BRIEF DESCRIPTION OF THE DRAWINGS

The present invention can be appreciated by the description which follows in conjunction with the following figures, wherein:

FIG. 1 is a function block diagram showing a configuration example of a road map generating system in accordance with an embodiment of this invention;
FIG. 2 is a flow chart showing processing of the road map generating system in accordance with the embodiment of this invention;
FIG. 3 is a diagram showing a main road and a branch road in a road map in accordance with the embodiment of this invention;
FIG. 4 is a diagram showing extraction of an exit line in accordance with the embodiment of this invention;
FIG. 5 is a diagram showing a first example of a method of linking a road exit vector in accordance with the embodiment of this invention;
FIG. 6 is a diagram showing a second example of a method of linking a road exit vector in accordance with the embodiment of this invention;
FIG. 7 is a diagram showing a third example of a method of linking a road exit vector in accordance with the embodiment of this invention;
FIG. 8 is an explanatory diagram of map accuracy evaluation in accordance with the embodiment of this invention;
FIG. 9 is a flow chart for map accuracy evaluation processing in accordance with the embodiment of this invention;
FIG. 10 is an explanatory diagram of an embodiment of car navigation system in accordance with this invention; and
FIG. 11 is a flow chart for the processing of the embodiment of car navigation system in accordance with this invention.

DETAILED DESCRIPTION OF THE PREFERRED EMBODIMENTS

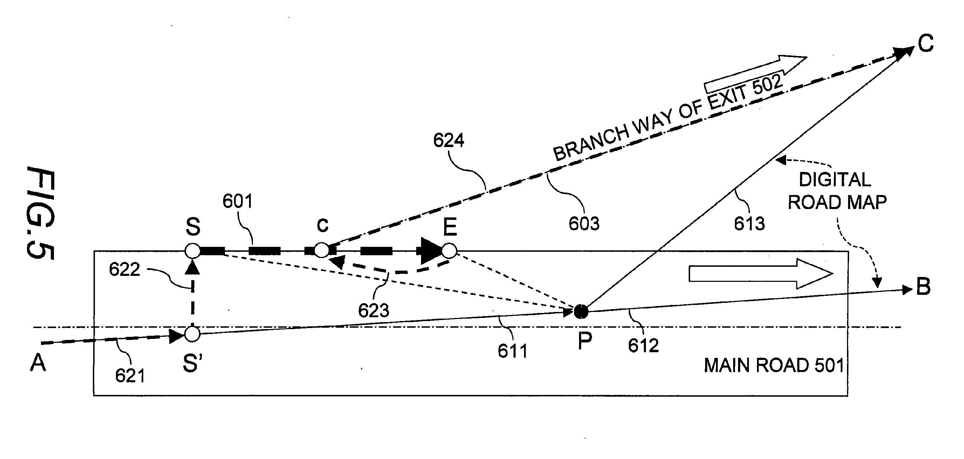

An embodiment of this invention will be described with reference to the accompanying drawings.

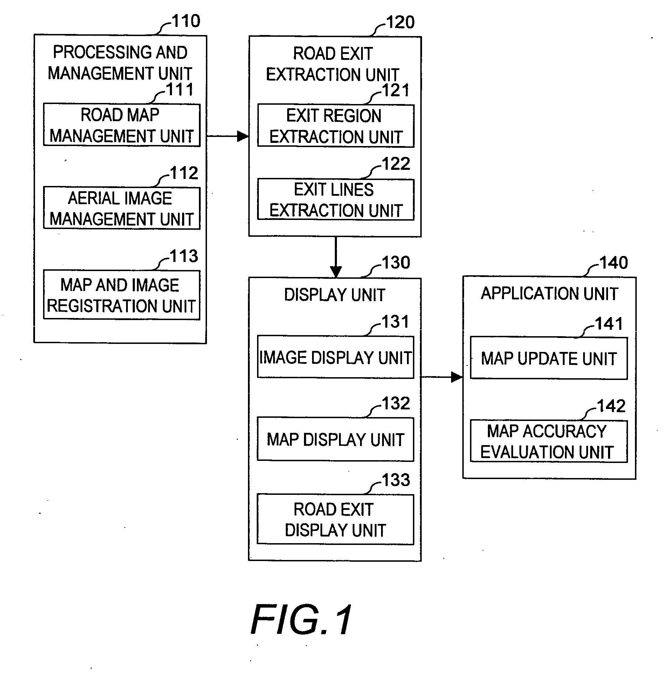

FIG. 1 is a function block diagram showing a configuration example of a road map generating system in accordance with the embodiment of this invention.
The road map generating system of this embodiment comprises a processing and management unit 110, a road exit extraction unit 120, a display unit 130, and an application unit 140.
The processing and management unit 110 comprises a road map management unit 111, an aerial imagery management unit 112, and a map and image registration unit 113. The road map management unit 111 comprises a storage device that stores digital data of a road map. The aerial imagery management unit 112 comprises a storage device that stores aerial image data. The map and image registration unit 113 chooses from the aerial imagery management unit 112 an aerial image that corresponds to road map data stored in the road map management unit 111 to position and overlay the chosen aerial image and the road map data with each other. "Aerial image" in this embodiment is a photographic image of a target road region taken from above.
The road exit extraction unit 120 comprises an exit region extraction unit 121 and an exit lines extraction unit 122. The exit region extraction unit 121 extracts map data and aerial image of the vicinity of a branch of a road. The exit lines extraction unit 122 identifies an exit separation line in an aerial image and extracts an exit vector.
The display unit 130 comprises an image display unit 131, a map display unit 132, and a road exit display unit 133. The image display unit 131 generates image data displayed on a display device (not shown in the drawing). The map display unit 132 generates image data for displaying a map on the display device (not shown in the drawing). The road exit display unit 133 calculates the size (e.g., the distance between P and S and the distance between P and E in FIG. 5) of an exit from an exit vector identified by the exit lines extraction unit 122, and also generates display data for displaying attribute data, which is information about an exit such as the name of the exit and the calculated size of the exit.
The application unit 140 comprises a map update unit 141 and a map accuracy evaluation unit 142. The map update unit 141 updates a map based on an exit vector identified by the exit lines extraction unit 122. The map accuracy evaluation unit 142 calculates the accuracy of an exit location marked in the original version of a map in relation to the updated version of the map which is provided by the map update unit 141.
The function blocks described above are mounted to a computer that has a processor, a memory, and an interface. In other words, the above function blocks are implemented with a given program that is executed by the processor and given data that is stored in the memory.

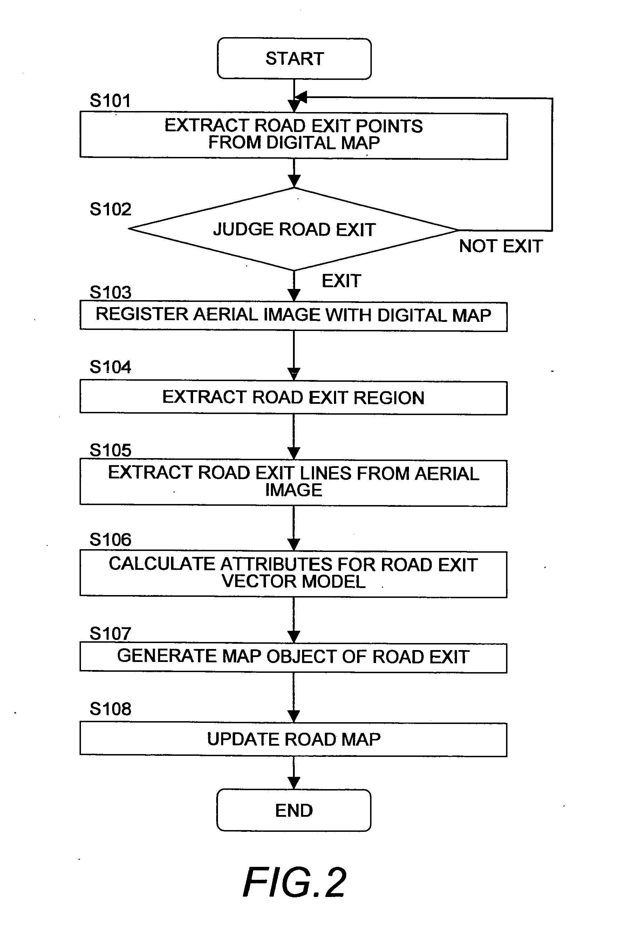

FIG. 2 is a flow chart showing processing of the road map generating system in accordance with the embodiment of this invention.
First, the map and image registration unit 113 extracts a branching position of a road from a map (S101). A branch of a road is represented by, for example, an exit point P between a main road and its branch road as shown in FIG. 3. The map and image registration unit 113 extracts a branching position by searching the main road for the exit point P from the start point of the main road toward the end point of the main road.
The map and image registration unit 113 then judges which of an exit and an entrance of the road the extracted branching position is (S102). A road branches off at an exit such that the farther a vehicle travels along its traveling direction, the larger the distance from the branching position becomes, whereas a road branches off at an entrance such that the farther a vehicle travels along its traveling direction, the smaller the distance from the branching position becomes. The map and image registration unit 113 accordingly judges a branching position that leads to a branch road stretching in the vehicle's traveling direction as an exit and a branching position that leads to a branch road stretching in the direction reverse to the vehicle's traveling direction as an entrance.

When the branching position is judged as an exit, the map and image registration unit 113 proceeds to Step S103. When it is judged that the branching position is not an exit, the map and image registration unit 113 returns to Step S101 to further search the main road for an exit point and extract the next branching position.

In Step S103, an aerial image that is associated with the exit point judged as an exit is chosen from among multiple aerial images stored in the aerial imagery management unit 112. The chosen aerial image and a part of the map that shows the vicinity of the branching position are positioned and overlaid with each other. This superimposing of the aerial image and the map employs positioning of a characteristic structure (e.g., building) that is found in the aerial image and the road map both, and/or features of the road (for example, intersections and bending points along the borders of the road).

Next, the exit region extraction unit 121 extracts a road exit region from the overlaid aerial image and map (S104). Specifically, the exit region extraction unit 121 defines an area having a given number of pixels around the exit point P found in Step S101 such that the area includes the entirety of the exit branch as indicated by the dot-dash line in FIG. 3. The size of the defined area can be varied depending on the scale of the exit branch. The defined area may have the same length or different lengths in directions down and across the road. Further, the distance from the edge of the defined area to the exit point P may be varied around the circumference as long as the area includes the exit point P, the exit separation line, and their surroundings.

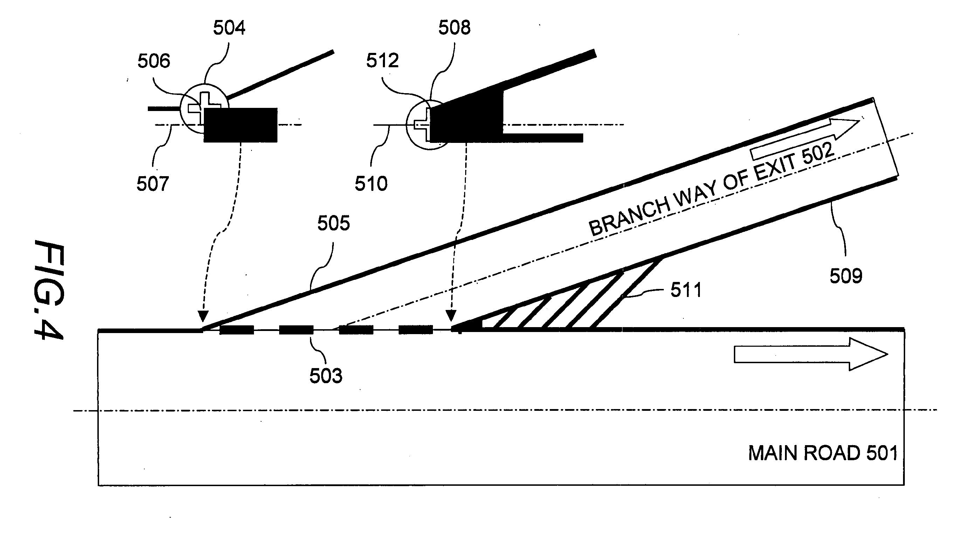

Next, the exit lines extraction unit 122 extracts an exit line from the aerial image (S105). Specifically, the exit lines extraction unit 122 seeks out a start point S and end point E of an exit line in the aerial image. The found start point S and end point E of the exit line are connected to form an exit vector. Details of this processing will be described later with reference to FIG. 4.

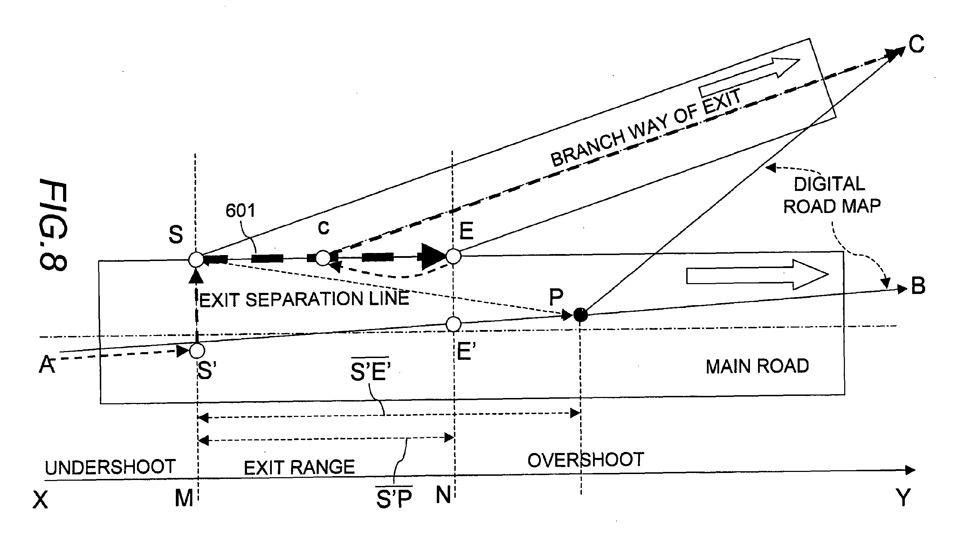

Next, the road exit display unit 133 calculates the attributes of the exit vector (S106). The attributes of an exit vector include, for example, lengths for evaluating the exit offset. While various measures may be employed as lengths for evaluating the exit offset, the distance between S' and P and the distance between E' and P in FIG. 8 are referred. The attributes of an exit vector also include the name of the exit which is extracted from road map data stored in the road map management unit 111.

Thereafter, the map display unit 132 and the road exit display unit 133 generate a map object of the road exit (S107). Specifically, the midpoint (c) of the exit vector defined in Step S 105 is determined first. Then the map data is referred to in order to determine the center line (cC) of the exit branch road. A link to the exit branch road from the main road through the exit vector is created, thereby linking data of the main road with data of the exit branch road. Details of this link generation will be described later with reference to FIG. 5, FIG. 6, and FIG. 7.

The map update unit 141 then updates the map data using the exit vector (S108).

FIG. 4 is a diagram showing extraction of an exit line in accordance with the embodiment of this invention.

The exit lines extraction unit 122 extracts an exit line in Step S 105 of FIG. 2.

Specifically, as shown in FIG. 4, the exit lines extraction unit 122 searches the aerial image for an exit separation line 503 painted on a road surface at the border between the main road 501 and the exit branch road 502. The exit separation line 503 has a unique pattern which places white lines of given length at regular intervals, and can be found through pattern matching.

The exit lines extraction unit 122 then seeks out a start point 504 of an exit line to be extracted. Specifically, an outer corner 506 of the exit separation line 503 where the exit separation line 503 meets an outer side line (the border between a lane and the roadside) 505 of the exit branch road 502 is determined as the start point 504 of the exit line. Alternatively, the start point 504 may be set on a center line 507 of the exit separation line 503.

The exit lines extraction unit 122 next seeks out an end point 508 of the exit line to be extracted. Specifically, a point along a center line 510 of the exit separation line 503 where the exit separation line 503 meets an inner side line 509 of the exit branch road 502 is determined as the end point 508 of the exit line. In other words, the apex of a road divider 511 which separates the main road 501 and the exit branch road 502 from each other is determined as the end point 508 of the exit line. Alternatively, the end point 508 may be set at an outer corner 512 of the exit separation line 503.

The search for the start point 504 of the exit line may be assisted by an operator who specifies the vicinity of the start point 504 of the exit line (one end of the exit separation line 503). Similarly, the search for the end point 508 of the exit line may be assisted by an operator who specifies the vicinity of the end point 508 of the exit line (the other end of the exit separation line 503). Employing instructions from an operator in a subsidiary manner makes it possible to reduce the time required for the processing of searching for the start point 504 and end point 508 of the exit line.

The exit line start point 504 and end point 508 determined in this fashion are connected to form an exit vector.

FIG. 5 is a diagram showing a first example of a method of linking a road exit vector in accordance with the embodiment of this invention.

As mentioned above, in conventional road maps, a link is formed from A to P and another from P to B on the main road 501. This enables a vehicle to move from A to B through P along the main road 501 on the map. Still another link is formed from P on the main road 501 to the point C on the exit branch road 502. This enables the vehicle traveling along the main road 501 from A to P to get off the main road 501 at P and travel on the exit branch road 502 toward the point C.

In this invention, an accurate road map is drawn with the use of an exit vector 601, which indicates the correct location of an exit.

Specifically, the midpoint c of the exit vector defined in Step S105 is determined first. The midpoint c can be obtained by averaging the coordinates of the start point S and the end point E. Thereafter, the map data is referred to in order to determine a center line (cC) 603 of the exit branch road.

Next, a link is formed from the main road to the exit branch road through the exit vector. The first step is to create a point S', which is a projection of the start point S of the exit vector onto the main road. The projection point S' is a point at which a perpendicular line dropped from the start point S meets the main road segment AP. Alternatively, the projection point S' may be an intersection point between the main road segment AP and a line perpendicular to a center line 602 of the main road and passing through the start point S.

The next step is to create a link 621, which is drawn from A on the main road 501 to the projection point S', a dummy link 622, which is drawn from the projection point S' to the start point S, a link 601, which is the exit vector from the start point S to the end point E, a dummy link 623, which is drawn from the end point E to the mid point c, and a link 624, which is drawn from the midpoint c to the point C on the exit branch road 502. The link 622 from the created projection point S' to the start point S and the link 623 from the end point E to the midpoint c are dummy links for linking the roads, and do not show the correct route of the vehicle.

With the links S' -> S -> E -> c, data of the main road is linked to data of the exit branch road. This enables the vehicle traveling from the point A along the main road 501 on the map to get off the main road and travel on the exit branch road 502 to the point C by following the links A -> S' -> S -> E -> c -> C.

Links created on the main road in this example are the link 621 from A to S' and a link from S' to B. The links enable the vehicle to travel from A to B through S' along the main road 501 on the map.

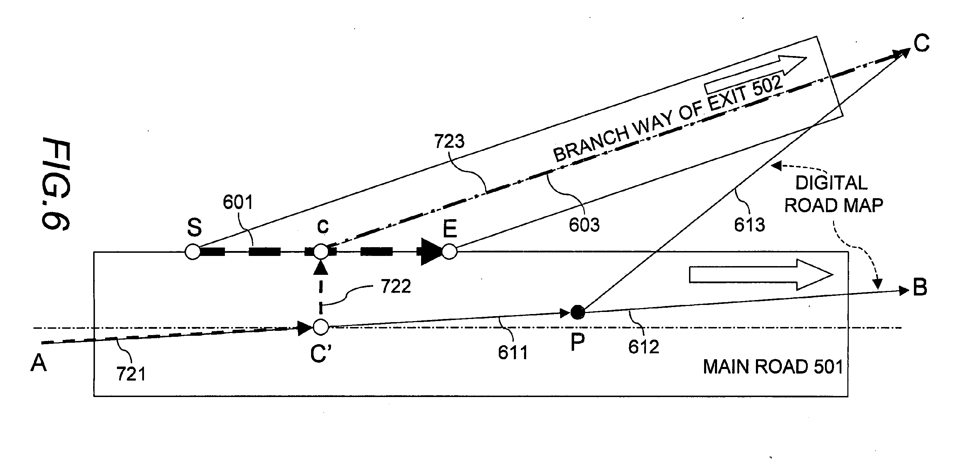

FIG. 6 is a diagram showing a second example of a method of linking a road exit vector in accordance with the embodiment of this invention.

In the first example described above with reference to FIG. 5, a main road segment 611 and the exit vector 601 are linked at the start point S of the exit vector 601. In the second example shown in FIG. 6, the main road segment 611 and the exit vector 601 are linked at the midpoint c of the exit vector 601.

The second example employs the same methods as the ones used in the first example to determine the midpoint c of the exit vector and to determine the center line (cC) 603 of the exit branch road.

Next, a link is formed from the main road to the exit branch road through the exit vector. The first step is to create a point C', which is a projection of the midpoint c of the exit vector on the main road. The projection point C' is a point where a perpendicular line dropped from the midpoint c meets the main road segment AP. Alternatively, the projection point C' may be an intersection point between the main road segment AP and a line perpendicular to the center line 602 of the main road and passing through the midpoint c.

The next step is to create a link 721, which is drawn from A on the main road 501 to the projection point C', a dummy link 722, which is drawn from the projection point C' to the midpoint c, and a link 723, which is drawn from the midpoint c to C on the exit branch road 502. The link 722 from the created projection point C' to the midpoint c is a dummy link for linking the roads, and does not show the correct route of the vehicle.

The link C' ->c links data of the main road with data of the exit branch road. This enables the vehicle traveling from the point A along the main road 501 on the map to get off the main road 501 and travel on the exit branch road 502 to the point C by following the links A -> C' -> c -> C.

Links created on the main road in this example are the link 721 from A to C' and a link from C' to B. The links enable the vehicle to travel from A to B through C' along the main road 501 on the map.

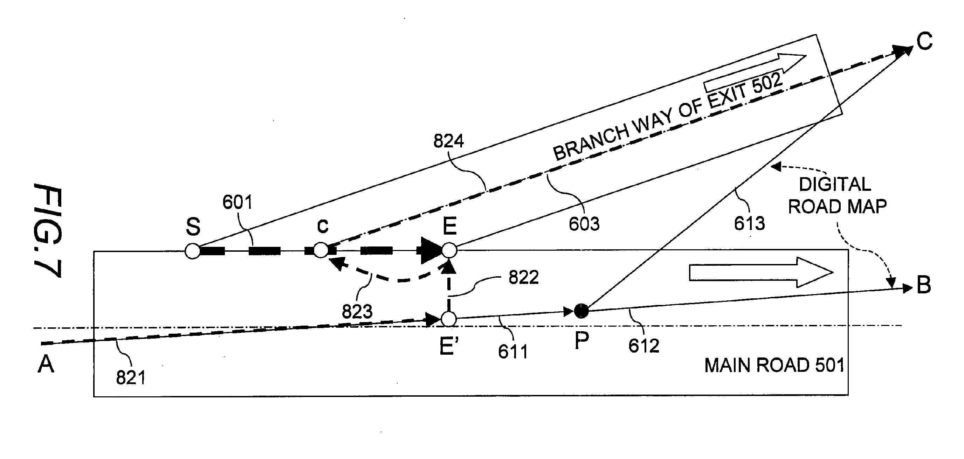

FIG. 7 is a diagram showing a third example of a method of linking a road exit vector in accordance with the embodiment of this invention.

In the first example described above with reference to FIG. 5, the main road segment 611 and the exit vector 601 are linked at the start point S of the exit vector 601. In the third example shown in FIG. 7, the main road segment 611 and the exit vector 601 are linked at the end point E of the exit vector 601.

The third example employs the same methods as the ones used in the first example to determine the midpoint c of the exit vector and to determine the center line (cC) 603 of the exit branch road.

Next, a link is formed from the main road to the exit branch road through the exit vector. The first step is to create a point E', which is a projection of the end point E of the exit vector on the main road. The projection point E' is a point where a perpendicular line dropped from the end point E meets the main road segment AP. Alternatively, the projection point E' may be an intersection point between the main road segment AP and a line perpendicular to the center line 602 of the main road and passing through the end point E.

The next step is to create a link 821, which is drawn from A on the main road 501 to the projection point E', a dummy link 822, which is drawn from the projection point E' to the end point E, a dummy link 823, which is drawn from the end point E to the midpoint c, and a link 824, which is drawn from the midpoint c to the point C on the exit branch road 502. The link 822 from the created projection point E' to the end point E and the link 823 from the end point E to the midpoint c are dummy links for linking the roads, and do not show the correct route of the vehicle.

With the links E' -> E -> c, data of the main road is linked with data of the exit branch road. This enables the vehicle traveling from the point A along the main road 501 on the map to get off the main road 501 and travel on the exit branch road 502 to the point C by following the links A -> E' -> E -> c -> C.

Links created on the main road in this example are the link 821 from A to E' and a link from E' to B. The links enable the vehicle to travel from A to B through E' along the main road 501 on the map.

Following links as shown in the first to the third examples thus links the main road 501 with the exit branch road 502 marked by the correct exit line (exit vector), and makes it possible to show the correct position of a vehicle on a road map.

FIG. 8 is an explanatory diagram of map accuracy evaluation in accordance with the embodiment of this invention.

The map accuracy evaluation unit 142 evaluates the difference between the position of the exit point P in the map data stored in the road map management unit 111 and the start point S of the exit line defined by the exit lines extraction unit 122. The map accuracy evaluation unit 142 obtains the difference by comparing a vector from the start point S of the exit branch line to the exit point P against an exit vector *SE*. Alternatively, a vector from the projection point S' of the start point S of the exit branch line to the exit point P may be compared against a projected exit vector *S'E'* since this comparison yields almost the same result as the above comparison. This embodiment employs the projection points S' and E' from the viewpoint of the ease of calculation.

Specifically, Expression (1) is used in comparing the vector *S'P* from the projection point S' of the start point S of the exit branch line to the exit point P against the projected exit vector *S'E'*, to thereby obtain a deviation ε.

$$\varepsilon = \frac{\overrightarrow{S'P}}{\overrightarrow{S'E'}} \quad \dots (1)$$

When the resultant deviation ε is negative, it means that the position of the exit point P is in an undershoot range, which comes before the exit range (before the correct position of the start point S). When the deviation ε is between 0 through 100%, the position of the exit point P is within the exit range. When the deviation ε is larger than 100%, the position of the exit point P is in an overshoot range, which is past the exit range.

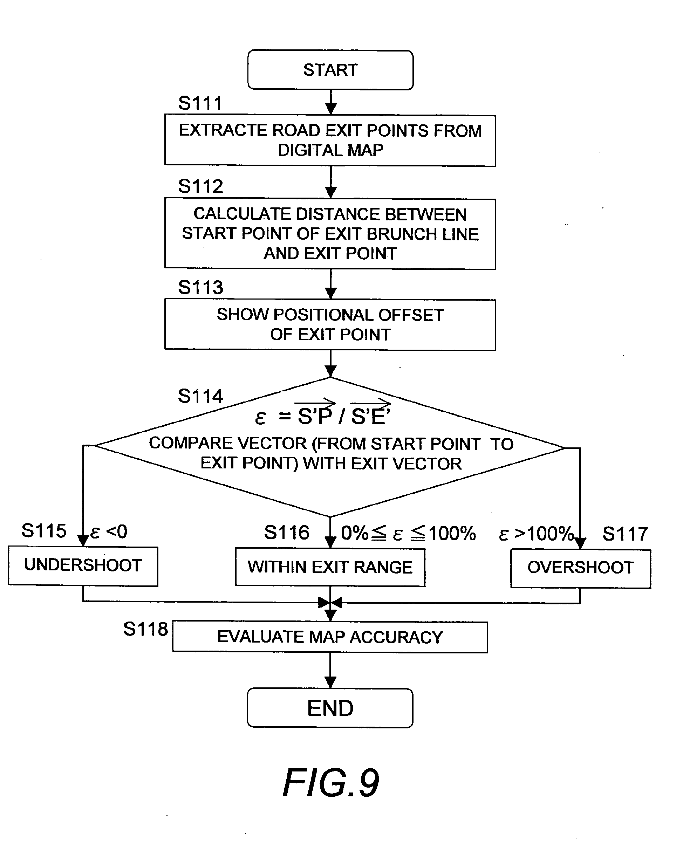

FIG. 9 is a flow chart for map accuracy evaluation processing in accordance with the embodiment of this invention.

First, the map accuracy evaluation unit 142 extracts the position (coordinates) of the exit point P from the map data stored in the road map management unit 111 (S111). The processing in Step S111 is the same as the one in Step S101 described above.

Next, the map accuracy evaluation unit 142 calculates the distance between the start point S of the exit vector which is found in Step S105 of the above-mentioned road map generating processing of FIG. 2 and the exit point P extracted in Step S111 (S112). The distance between the start point S of the exit vector and the exit point P is determined as an exit point position offset distance, and the vector SP is displayed on the map (S113).

The map accuracy evaluation unit 142 next compares the vector *S'P* from the projection point S' of the start point S of the exit branch line to the exit point P against the projected exit vector *S'E'* to obtain the deviation ε (S114).

When the resultant deviation ε is negative, it shows that the position of the exit point P is on the near side of the exit range (S115). When the deviation ε is 0 through 100%, it shows that the position of the exit point P is within the exit range (S116). When the deviation ε is larger than 100%, it shows that the position of the exit point P is past the exit range (S117).

After the deviation ε is calculated for multiple exits, the obtained deviations ε are sorted in Steps S115 to S117 and displayed in a graph (S118). According to the graph, the map's tendency regarding the offset can be known.

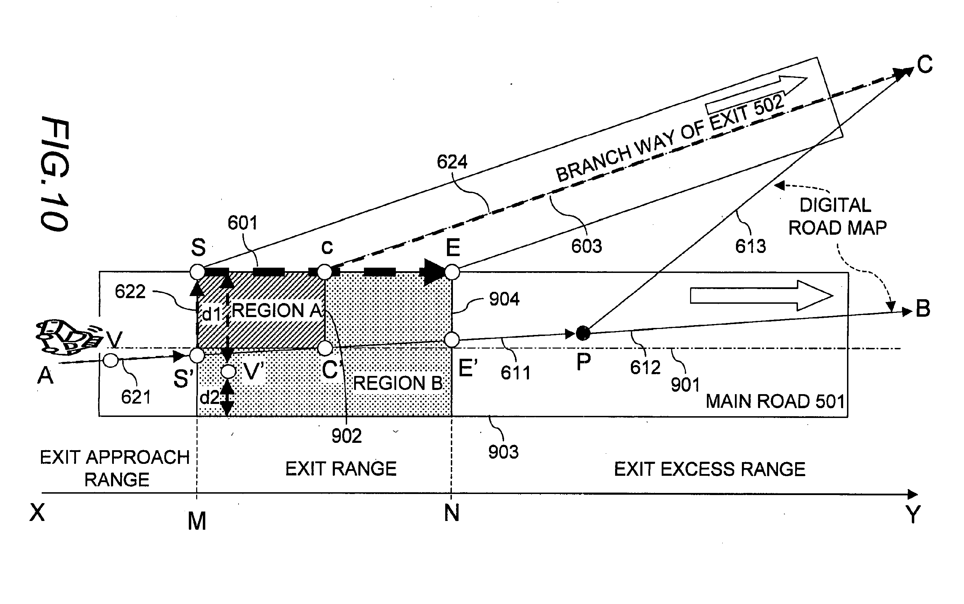

FIG. 10 is an explanatory diagram of a car navigation system in accordance with this invention.

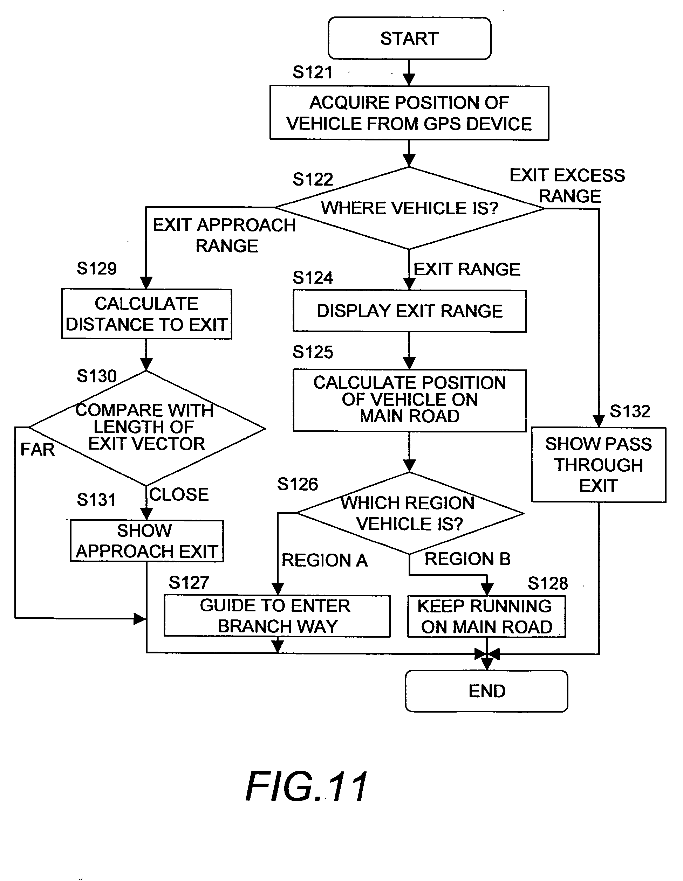

A car navigation system has a position obtaining unit, a computing unit, a memory, and a display unit. The position obtaining unit is equipped with a GPS receiver and obtains vehicle location information by way of signals from a GPS satellite. The computing unit comprises a processor and executes computation with the use of the vehicle location obtained by the position obtaining unit. In this embodiment, in particular, the computing unit executes processing shown in FIG. 11. The memory is storage device that stores a program executed by the computing unit and map information used by the computing unit. The display unit displays computation results provided by the computing unit to a user.

Described next is an example of main/branch judgment as to which of keeping to a main road and taking an exit to its branch the vehicle is judged.

First, a main road is sectioned into an exit approach range (A-S'), an exit range (S'-E'), and a past exit range (E-B). In which range a vehicle V is along the main road is judged from a parameter *a*, which is calculated by Expression (2).

$$a = 1 - \frac{\overrightarrow{S'V}}{\overrightarrow{S'E'}} \quad \ldots (2)$$

When the parameter *a* defined as above is 1, it means that the vehicle V is at the projection point S'. When the parameter *a* is 0, the vehicle V is at the projection point E'. In other words, the vehicle V is in the exit approach range when the parameter *a* exceeds 100%, the vehicle V is in the exit range when the parameter *a* is equal to or lower than 100% and equal to or higher than 0%, and the vehicle V is in the past exit range when the parameter a is lower than 0%.

The vehicle V running on the main road travels from A to S'. At *a* = 0, the vehicle V reaches S', and further travels to C'. The car navigation system judges whether or not the actual position of the vehicle V (for example, the actual vehicle location obtained by GPS) passes through an area A while the vehicle V travels from S' to C'.

The area A is defined as a quadrangle within the exit range that is nearer to the exit branch than a road center line 901, and is nearer to the start point S than the midpoint c of the exit vector. Specifically, the area A is defined as a substantially rectangular area enclosed by the line segment 622, which connects the start point S of the exit vector and the projection point S', a line segment 902, which connects the midpoint c of the exit vector and the projection point C', the exit vector 601, and the center line 901 of the main road.

An area B equals to the exit range of the main road 501 excluding the area A. Specifically, the area B is defined as a substantially rectangular area enclosed by the line segment 622, which connects the start point S of the exit vector and the projection point S', the straight line 904, which connects the end point E of the exit vector and the projection point E', the exit vector 601, and a center divider line 903 of the main road, excluding the area A.

In a case where the main road has three or more lanes on one side, the lane closest to the exit may be determined as the area A.

The area A is, in short, defined as a rectangle having a given proportion of the width of the main road. The proportion is determined based on how many lanes the main road has.

When the passage of the actual vehicle position through the area A while the vehicle V travels from S' to C' is observed, the car navigation system judges that the vehicle V is heading for the branch road 502 to take the exit, and moves the position of the vehicle V from the main road 501 to the exit vector 601. Since the main road 501 is linked to the exit vector 602 by the dummy link S -> S', the vehicle V traveling on the main road 501 can enter the exit branch road 502 through the exit vector 601.

In the case where the vehicle V passes through the area A but stays on the main road 501 after passing through the exit range and entering the past exit range, it is judged that the vehicle V is traveling on the main road and the vehicle V is moved from the exit vector 602 back to the main road (E -> B).

FIG. 11 is a flow chart for the processing of the embodiment of car navigation system in accordance with this invention.

First, the location of the vehicle is obtained by GPS (S121). Next, the parameter *a* is calculated through the above Expression (2) to judge in which range the vehicle V is traveling (S122).

When it is judged as a result that the vehicle is in the exit range, the car navigation system displays the exit (S124). Specifically, the start point S and end point E of the exit vector are displayed overlaid on the road map.

The position of the vehicle on the main road is calculated next (S125). Specifically, the car navigation system calculates a distance *d1* between the vehicle and the exit vector and a distance *d2* between the vehicle and the border 903 of the main road (the center divider line which separates the main road 501 from opposite lanes).

The car navigation system next judges where in the exit range the vehicle is (S126). Specifically, the vehicle position calculated in Step S125 (by comparing the distances *d1* and *d2*) indicates whether the vehicle is traveling on the exit side of the main road or the center divider line side of the main road. For instance, when the vehicle is at a position indicated by a symbol V' of FIG. 10, the distance *d1* is larger than the distance *d2* and it shows that the vehicle is traveling in the center divider side lane. The parameter *a* is then used to further judge in what part of the exit range the vehicle is.

When expressions 100% $\geq a \geq$ 50% and *d1* $\leq$ *d2* are both established, it is judged that the vehicle is traveling in the area A. Further, when an expression 50% > *a* $\geq$ 0% or an expression *d1* > *d2* is established, it is judged that the vehicle is traveling in the area B.

In the case where the vehicle is found to be in the area A, the car navigation system judges that the possibility of the vehicle taking the exit to the branch road 502 is strong, and shows the vehicle on the map traveling on the exit branch road 502 (S127). In the case where the vehicle is found to be in the area B, the car navigation system judges that the vehicle is not likely to take the exit to the branch road 502 (that the possibility of the vehicle continuing on the main road 501 is strong), and shows the vehicle on the map keeping to the main road (S128).

The vehicle on the map can be shown on the exit branch road 502 only when the traveling speed of the vehicle is equal to or lower than a given value. This is because a vehicle traveling in the area A but at a too high speed is not likely to take the exit to the branch road 502.

When it is judged in Step S122 that the vehicle has not reached the exit range yet (is in the exit approach range), the position coordinates of the vehicle and the position coordinates of the start S of the exit vector are used to calculate a distance *VS* between the vehicle and the start point of the exit vector (exit start point) (S129).

The calculated distance VS is compared against the length of the exit vector *SE* (S130).

For instance, the car navigation system judges that the vehicle is approaching the exit start point when Expression (3) described below is true, and displays an exit approach alert (S131). Specifically, regarding the exit approach alert, a message informing of an approaching exit and/or an instruction to switch to the exit side lane is displayed on the display unit. The message and/or instruction displayed by the display unit may be accompanied by a voice or sound alerting the driver, or the voice or sound may be used alone.

$$VS = n \times \overrightarrow{SE} \quad (n=1,2,...) \ ... \ (3)$$

An arbitrary number can be set as the count *n* in Expression (3). The count *n* may be varied depending on the vehicle speed. That is, the count *n* is set to a large value when the vehicle speed is high, so the display unit can start displaying the exit approach alert while the distance to the exit is still large enough.

When Expression (3) is false, on the other hand, the car navigation system judges that the vehicle is far from the exit start point, and does not display the exit approach alert (S 131).

When it is judged in Step S 122 that the vehicle has run past the exit range (is traveling in the past exit range), the car navigation system displays a past exit alert (S 132). Specifically, regarding the past exit alert, a message informing of a passed exit is displayed on the display unit. The message displayed on the display unit may be accompanied by a voice or sound alerting the driver, or the voice or sound may be used alone.

In the case where the vehicle on the map is shown on the exit branch road in Step S127 but the vehicle is actually staying on the main road, the vehicle position on the map is corrected and moved back to the main road. In the case where the vehicle on the map is moved to the main road in Step S128 but the vehicle is actually traveling on the exit branch road, the vehicle position on the map is corrected and moved to the exit branch road.

Described next is another example of the main/ branch judgment (S126).

A second example described below uses a branching probability *P* defined by Expression (4) to judge whether or not the vehicle is going to take the exit to the branch road 502.

$$P = K \times a \times \frac{d1}{d1 + d2} \ ... \ (4)$$

In Expression (4), the parameter *a* is a parameter calculated by Expression (2) and indicating where in the exit range the vehicle is. The distances *d1* and *d2* are parameters indicating the vehicle position and calculated in Step S125. *K* is a predetermined coefficient for making the probability *P* into a value that is easy to handle in the subsequent processing.

The calculated probability *P* is compared against a given threshold to judge whether to show the vehicle on the map traveling on the exit branch road 502. When the calculated probability *P* is equal to or larger than the given value (e.g., 0.5), there is a strong possibility that the vehicle takes the exit to the branch road 502, and the position of the traveling vehicle on the map is moved to the exit branch road 502 (S127). On the other hand, when the calculated probability *P* is smaller than the given threshold, the vehicle is likely to continue on the main road 501, and the position of the vehicle on the map is kept to the main road (S 128).

As in the above example, the vehicle on the map can be shown on the exit branch road 502 only when the traveling speed of the vehicle is equal to or smaller than a given value. The probability *P* may be a function of the vehicle speed. Specifically, the function is set such that the probability *P* is large when the vehicle speed is low whereas the probability *P* becomes smaller as the vehicle speed increases.

While the present invention has been described in detail and pictorially in the accompanying drawings, the present invention is not limited to such detail but covers various obvious modifications and equivalent arrangements, which fall within the purview of the appended claims.

**Claims**

1. A machine-readable medium, containing at least one sequence of instructions that, when executed, causes a machine to:

   geographically align a road map and a photographic image of a region that includes a region depicted by the road map;
   extract, from the aligned photographic image, a start point and an end point of an exit line which separates a main road and a branch road;
   determine an exit line connecting the extracted start point and the extracted end point; and
   identify a branching position between the main road and the branch road based on the determined exit line.

**2.** A machine-readable medium according to claim 1, wherein the extracting of the start point and the end point of the exit line which separates the main road and the branch road includes extracting, from the aligned photographic image, as the start point and the end point of the exit line, ends of an exit separation line displayed on a road surface to indicate a border between the main road and the branch road.

**3.** A machine-readable medium according to claim 1, further containing at least one sequence of instructions that, when executed, causes the machine to:

  calculate a projection point of a feature point of the exit line onto the main road; and
  link the main road with the branch road by linking, at least the projection point, the feature point of the exit line, and a center point of the exit line.

**4.** A machine-readable medium according to claim 3, wherein the feature point of the exit line includes the start point of the exit line, and
wherein the linking of the main road with the branch road includes linking the main road with the branch road by linking a projection point of the start point onto the main road, the start point of the exit line, the end point of the exit line, and the center point of the exit line, in order.

**5.** A machine-readable medium according to claim 3, wherein the feature point of the exit line includes the center point of the exit line, and
wherein the linking of the main road with the branch road includes linking the main road with the branch road by linking a projection point of the center point onto the main road and the center point of the exit line, in order.

**6.** A machine-readable medium according to claim 3, wherein the feature point of the exit line includes the end point of the exit line, and
wherein the linking of the main road with the branch road includes linking the main road with the branch road by linking a projection point of the end point onto the main road, the end point of the exit line, and the center point of the exit line, in order.

**7.** A map generating apparatus for drawing a road map from digital data of a road map and a photographic image of a region that includes a region depicted by the road map, comprising:

  a computing unit; and
  a memory,

wherein the computing unit is configured to:

  geographically align a provided photographic image and a provided road map with each other;
extract, from the aligned photographic image, a start point and an end point of an exit line which separates a main road and a branch road;
determine an exit line connecting the extracted start point and the extracted end point; and
identify a branching position between the main road and the branch road based on the determined exit line.

**8.** A map generating apparatus according to claim 7, wherein the computing unit is further configured to extract, from the aligned photographic image, as the start point and the end point of the exit line, ends of an exit separation line displayed on a road surface to indicate a border between the main road and the branch road.

**9.** A map generating apparatus according to claim 7, wherein the computing unit is further configured to:

  calculate a projection point of a feature point of the exit line onto the main road; and
  link the main road with the branch road by linking, at least the projection point, the feature point of the exit line, and a center point of the exit line.

**10.** A position display system for displaying a position on a map based on positional information obtained by a position measuring device, comprising:

  a computing unit;
  a display unit; and
  a memory,

wherein the memory stores data of a map containing an exit line which separates a main road and a branch road,
wherein the position measuring device measures a position of a vehicle, and
wherein the computing unit is configured to:

  identify, on the main road, a position measured by the position measuring device; and
  move a displayed position of the vehicle, when the identified position is within a given area which is zoned by the exit line.

**11.** A position display system according to claim 10, wherein the given area is a substantially quadrangular area having a half of the exit line as one of longer sides of the quadrangle, the start point of the exit line as one apex, and one of shorter sides whose length equals to a predetermined proportion of a width of the main road.

**12.** A position display system according to claim 10, wherein the computing unit is further configured to move the displayed position of the vehicle to the branch road when the vehicle is traveling at a speed equal to or lower than a predetermined value and it is judged that a probability of the vehicle entering the branch road is high.

13. A position display system according to claim 10, wherein the computing unit is further configured to:

determine a first axis, which is substantially parallel to the main road, and a second axis, which is substantially orthogonal to the main road;
judge where the measured position of the vehicle is along the second axis;
calculate a first length in a direction of the second axis between the start point of the exit line and a position of the vehicle, and a second length in the direction of the second axis between a center line of the main road and the position of the vehicle;
calculate a probability of the vehicle entering the branch road with the use of a function with which a small value is obtained when the first length is larger than the second length and a large value is obtained when the second length is larger than the first length; and
judge, when the calculated probability exceeds a given threshold, that the vehicle running through the measured position is likely to enter the branch road and move the displayed position of the vehicle from the main road to the branch road.

EP 1 879 163 A1

```
┌─────────────────────────┐  ┌─────────────────────────┐
│                   ⌐110  │  │                   ⌐120  │
│ PROCESSING AND          │  │ ROAD EXIT               │
│ MANAGEMENT UNIT         │  │ EXTRACTION UNIT         │
│              ⌐111       │  │              ⌐121       │
│ ┌─────────────────────┐ │  │ ┌─────────────────────┐ │
│ │ ROAD MAP            │ │──▶ │ EXIT REGION         │ │
│ │ MANAGEMENT UNIT     │ │  │ │ EXTRACTION UNIT     │ │
│ └─────────────────────┘ │  │ └─────────────────────┘ │
│              ⌐112       │  │              ⌐122       │
│ ┌─────────────────────┐ │  │ ┌─────────────────────┐ │
│ │ AERIAL IMAGE        │ │  │ │ EXIT LINES          │ │
│ │ MANAGEMENT UNIT     │ │  │ │ EXTRACTION UNIT     │ │
│ └─────────────────────┘ │  │ └─────────────────────┘ │
│              ⌐113       │  └───────────┬─────────────┘
│ ┌─────────────────────┐ │              │  ⌐130
│ │ MAP AND IMAGE       │ │              ▼
│ │ REGISTRATION UNIT   │ │  ┌─────────────────────────┐  ┌─────────────────────────┐
│ └─────────────────────┘ │  │                   ⌐130  │  │                   ⌐140  │
└─────────────────────────┘  │ DISPLAY UNIT            │  │ APPLICATION UNIT        │
                             │              ⌐131       │  │              ⌐141       │
                             │ ┌─────────────────────┐ │  │ ┌─────────────────────┐ │
                             │ │ IMAGE DISPLAY UNIT  │ │  │ │ MAP UPDATE UNIT     │ │
                             │ └─────────────────────┘ │  │ └─────────────────────┘ │
                             │              ⌐132       │  │              ⌐142       │
                             │ ┌─────────────────────┐ │──▶ ┌─────────────────────┐ │
                             │ │ MAP DISPLAY UNIT    │ │  │ │ MAP ACCURACY        │ │
                             │ └─────────────────────┘ │  │ │ EVALUATION UNIT     │ │
                             │              ⌐133       │  │ └─────────────────────┘ │
                             │ ┌─────────────────────┐ │  └─────────────────────────┘
                             │ │ ROAD EXIT           │ │
                             │ │ DISPLAY UNIT        │ │
                             │ └─────────────────────┘ │
                             └─────────────────────────┘
```

*FIG.1*

11

```
                              ┌──────────────────┐
                              │      START       │
                              └──────────────────┘
                                       │
 S101                                  ▼
        ┌──────────────────────────────────────────────┐
        │      EXTRACT ROAD EXIT POINTS                 │
        │        FROM DIGITAL MAP                       │
        └──────────────────────────────────────────────┘
                                       │
 S102                                  ▼
              ◇──────────────────────────────────────◇
              ◇          JUDGE ROAD EXIT             ◇──── NOT EXIT
              ◇──────────────────────────────────────◇
                                       │ EXIT
 S103                                  ▼
        ┌──────────────────────────────────────────────┐
        │  REGISTER AERIAL IMAGE WITH DIGITAL MAP       │
        └──────────────────────────────────────────────┘
                                       │
 S104                                  ▼
        ┌──────────────────────────────────────────────┐
        │        EXTRACT ROAD EXIT REGION               │
        └──────────────────────────────────────────────┘
                                       │
 S105                                  ▼
        ┌──────────────────────────────────────────────┐
        │   EXTRACT ROAD EXIT LINES FROM AERIAL         │
        │               IMAGE                           │
        └──────────────────────────────────────────────┘
                                       │
 S106                                  ▼
        ┌──────────────────────────────────────────────┐
        │  CALCULATE ATTRIBUTES FOR ROAD EXIT           │
        │           VECTOR MODEL                        │
        └──────────────────────────────────────────────┘
                                       │
 S107                                  ▼
        ┌──────────────────────────────────────────────┐
        │   GENERATE MAP OBJECT OF ROAD EXIT            │
        └──────────────────────────────────────────────┘
                                       │
 S108                                  ▼
        ┌──────────────────────────────────────────────┐
        │           UPDATE ROAD MAP                     │
        └──────────────────────────────────────────────┘
                                       │
                                       ▼
                              ┌──────────────────┐
                              │       END        │
                              └──────────────────┘
```

*FIG.2*

FIG.3

FIG.4

506  504  512  508
507  510  505  509
503  511

BRANCH WAY OF EXIT 502

MAIN ROAD 501

EP 1 879 163 A1

14

FIG.5

FIG.6

*FIG.7*

FIG.8

```
                    ┌─────────────────┐
                    │      START      │
                    └─────────────────┘
         S111                │
        ┌───────────────────────────────────────┐
        │  EXTRACTE ROAD EXIT POINTS FROM        │
        │  DIGITAL MAP                           │
        └───────────────────────────────────────┘
         S112                │
        ┌───────────────────────────────────────┐
        │  CALCULATE DISTANCE BETWEEN            │
        │  START POINT OF EXIT BRUNCH LINE       │
        │  AND EXIT POINT                        │
        └───────────────────────────────────────┘
         S113                │
        ┌───────────────────────────────────────┐
        │  SHOW POSITIONAL OFFSET                │
        │  OF EXIT POINT                         │
        └───────────────────────────────────────┘
                             │
```

S114

$$\varepsilon = \overrightarrow{S'P} / \overrightarrow{S'E'}$$

COMPARE VECTOR (FROM START POINT TO EXIT POINT) WITH EXIT VECTOR

S115 $\varepsilon < 0$

S116 $0\% \leqq \varepsilon \leqq 100\%$

$\varepsilon > 100\%$ S117

| UNDERSHOOT | WITHIN EXIT RANGE | OVERSHOOT |

S118 | EVALUATE MAP ACCURACY |

```
                    ┌─────────────────┐
                    │       END       │
                    └─────────────────┘
```

# FIG.9

# FIG.10

START

S121

ACQUIRE POSITION OF
VEHICLE FROM GPS DEVICE

S122

WHERE VEHICLE IS?

EXIT EXCESS
RANGE

EXIT APPROACH
RANGE

EXIT RANGE

S129

CALCULATE
DISTANCE TO EXIT

S124

DISPLAY EXIT RANGE

S125

CALCULATE POSITION
OF VEHICLE ON
MAIN ROAD

S132

SHOW PASS
THROUGH
EXIT

S130

COMPARE WITH
LENGTH OF
EXIT VECTOR

FAR

CLOSE

S131

SHOW
APPROACH EXIT

S126

WHICH REGION
VEHICLE IS?

REGION A

REGION B

S127

GUIDE TO ENTER
BRANCH WAY

S128

KEEP RUNNING
ON MAIN ROAD

END

# FIG.11

**European Patent Office**

## PARTIAL EUROPEAN SEARCH REPORT

which under Rule 45 of the European Patent Convention
shall be considered, for the purposes of subsequent
proceedings, as the European search report

Application Number

EP 07 01 3276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 199 06 614 A1 (EQUOS RESEARCH KABUSHIKI KAISH [JP]; AISIN AW CO [JP]) 7 October 1999 (1999-10-07) * page 10, line 11 - line 35 * * figures 11a-c * * figures 12a-c * ----- | 10-13 | INV. G09B29/10 G01C21/26 |
| A | US 2006/009904 A1 (SAKASHITA NAOHIRO [JP] ET AL) 12 January 2006 (2006-01-12) * figure 4 * * paragraph [0101] - paragraph [0106] * ----- | 10-13 | |
| A | US 2001/056326 A1 (KIMURA KEIICHI [JP]) 27 December 2001 (2001-12-27) * paragraph [0049] * ----- | 10-13 | |

TECHNICAL FIELDS SEARCHED (IPC)

G09B
G01C

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 5 October 2007 | Hanon, David |

EPO FORM 1503 03.82 (P04C07)

**European Patent Office**

**INCOMPLETE SEARCH
SHEET C**

Application Number

EP 07 01 3276

Claim(s) searched completely:
     10-13

Claim(s) not searched:
     1-9

Reason for the limitation of the search (non-patentable invention(s)):

Article 52 (2)(a) EPC - Mathematical method
Article 52 (2)(c) EPC - Scheme, rules and method for performing mental acts
Article 52 (2)(c) EPC - Program for computers

Given that the claims 1-9 are formulated in terms of such subject matter or merely specify commonplace features relating to its technological implementation, the search examiner could not establish any technical problem which might potentially have required an inventive step to overcome.

## ANNEX TO THE EUROPEAN SEARCH REPORT
## ON EUROPEAN PATENT APPLICATION NO.

EP 07 01 3276

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2007

| Patent document cited in search report | | Publication date | Patent family member(s) | | Publication date |
|---|---|---|---|---|---|
| DE 19906614 | A1 | 07-10-1999 | US | 6577334 B1 | 10-06-2003 |
| US 2006009904 | A1 | 12-01-2006 | CN | 1719490 A | 11-01-2006 |
| | | | DE | 102005031409 A1 | 02-02-2006 |
| | | | JP | 2006023159 A | 26-01-2006 |
| US 2001056326 | A1 | 27-12-2001 | JP | 2001289654 A | 19-10-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006191361 A
- JP 2005234603 A